# EUROPÄISCHE PATENTSCHRIFT

(11) **EP 4 203 241 B1**
(45) Veröffentlichungstag und Bekanntmachung des Hinweises auf die Patenterteilung: **16.10.2024**
(21) Anmeldenummer: 22208502.9
(22) Anmeldetag: 21.11.2022
(51) Int. Cl.: H02J 50/10, H02J 7/00, H02J 50/00

(54) **HAUSHALTVORRICHTUNG UND VERFAHREN ZUM BETREIBEN EINER HAUSHALTVORRICHTUNG**
DOMESTIC DEVICE AND METHOD FOR OPERATING A DOMESTIC DEVICE
APPAREIL MÉNAGER ET PROCÉDÉ DE FONCTIONNEMENT D'UN APPAREIL MÉNAGER

(30) Priorität: 22.12.2021 BE 202106031
(43) Veröffentlichungstag der Anmeldung: 28.06.2023
(73) Patentinhaber: Miele & Cie. KG, 33332 Gütersloh (DE)
(72) Erfinder: Auell, Alexander, 33613 Bielefeld (DE); Brinkkötter, Maik, 33330 Gütersloh (DE); Gross, Simon, 32257 Bünde (DE); Lülling, Clara, 44139 Dortmund (DE); Schübel, Dirk, 33330 Gütersloh (DE); Schulze Schleithoff, Anna-Lena, 33615 Bielefeld (DE); Thomas, Sebastian, 85293 Reichertshausen (DE)

(56) Entgegenhaltungen:
- EP-A1- 3 524 889
- EP-A2- 1 260 158
- EP-A2- 2 456 039
- DE-A1- 102017 129 009

## Beschreibung

Die Erfindung betrifft eine Haushaltvorrichtung und ein Verfahren zum Betreiben einer Haushaltvorrichtung.

Die DE 197 05 779 C1 beschreibt ein Abstellelement für einen elektrischen Verbraucher, wobei das Abstellelement eine Netzanschlussleitung zur Stromversorgung eines Steckkupplungsteils aufweist, das aus einer Oberfläche des Abstellelementes ragt. Dokument DE 10 2017 129009 A1 zeigt bereits, in einem Haushaltsgerät eine Anzeige und die Möglichkeit einer Ladevorrichtung für ein externes Gerät vorzusehen. Auf der Anzeige werden kochbezogene Informationen wiedergegeben.

Der hier vorgestellte Ansatz stellt sich die Aufgabe, eine verbesserte Haushaltvorrichtung und ein verbessertes Verfahren zum Betreiben einer Haushaltvorrichtung zu schaffen.

Die Aufgabe wird gelöst durch eine Haushaltvorrichtung mit den Merkmalen des Anspruches 1 und ein Verfahren zum Betreiben einer Haushaltvorrichtung mit den Merkmalen des Anspruchs 14. Bevorzugte Weiterbildungen der Erfindung sind Gegenstand der Unteransprüche. Weitere Vorteile und Merkmale der Erfindung ergeben sich aus den Ausführungsbeispielen. Durch den vorgestellten Ansatz kann vorteilhafterweise erreicht werden, dass mobile Geräte unter Verwendung eines Haushaltgeräts induktiv aufgeladen werden können. Dadurch kann eine Anzahl benötigter Steckdosen reduziert werden, beziehungsweise vorhandene Steckdosen können anderweitig verwendet werden, beispielsweise für kabelgeführte Küchengeräte freigehalten werden. Weiterhin kann beispielsweise eine Arbeitsfläche durch den vorgestellten Ansatz frei von stromführenden Kabeln bleiben und eine zum induktiven Laden verwendete Elektronik kann vor äußeren Einflüssen geschützt angeordnet sein.

Eine entsprechende Haushaltvorrichtung umfasst ein Haushaltgerät mit einer Ladeschnittstelle und eine Ladeeinrichtung zum induktiven Laden eines mobilen Gerätes, wobei die Ladeeinrichtung elektrisch mit der Ladeschnittstelle verbunden oder verbindbar ist.

Das Haushaltgerät kann beispielsweise als ein Küchengerät realisiert sein, wie beispielsweise ein Gargerät, ein Kochfeld oder ein Kühlgerät. Alternativ kann das Haushaltgerät beispielsweise auch als ein Reinigungsgerät ausgeformt sein. Die Ladeeinrichtung kann die Funktionalität einer induktiven Ladestation bereitstellen. Die Ladeeinrichtung kann an einem zum Laden des mobilen Gerätes vorgesehenen Ladeabschnitt oder Ladebereich der Haushaltvorrichtung angeordnet sein. Das mobile Gerät kann vorteilhafterweise durch Auflegen auf den Ladeabschnitt und/oder durch Platzieren in dem Ladebereich unter Verwendung der Ladeeinrichtung geladen werden. Die Ladeeinrichtung kann ein integraler Bestandteil der Haushaltvorrichtung sein, beispielsweise fest innerhalb der Haushaltvorrichtung verbaut sein.

Die Ladeschnittstelle kann als eine elektrische Schnittstelle zur Energieübertragung und optional zur Datenübertragung ausgeführt sein. Somit kann das mobile Gerät beispielsweise während eines Betiebsvorganges und/oder in einem Betriebszustand des Haushaltgerätes, insbesondere während eines Kochvorgangs, für den Nutzer sichtbar platziert und dabei geladen werden. Die Ladeeinrichtung kann dennoch beispielsweise vor Feuchtigkeit, Fettspritzern oder Schmutzpartikeln geschützt positioniert sein. Je nach Aufgabe und Ausgestaltung kann die Ladeeinrichtung auch für einen Nutzer nicht sichtbar, z. B. in einer Schublade angeordnet sein, sodass das mobile Gerät beispielsweise während eines Betiebsvorganges und/oder in einem Betriebszustand des Haushaltgerätes, insbesondere eines Kochvorgangs, für den Nutzer nicht sichtbar platziert und dabei geladen wird.

Vorzugsweise ist die Ladeeinrichtung im Wesentlichen frei und/oder benutzerdefiniert positionierbar und/oder anordenbar. Insbesondere kann die Ladeeinrichtung in wenigstens einer Schublade positionierbar und/oder anordenbar sein. In zweckmäßigen Weiterbildungen kann die Ladeeinrichtung auf und/oder unterhalb wenigstens einer Arbeitsplatte positionierbar und/oder anordenbar sein und/oder in wenigstens eine Arbeitsplatte integrierbar sein.

In vorteilhaften Weiterbildungen ist die Ladeeinrichtung dazu geeignet und ausgebildet wenigstens zwei, bevorzugt drei, insbesondere vier oder noch mehr mobile Geräte gleichzeitig induktiv zu laden.

Die vorliegende Erfindung bietet viele Vorteile. Ein erheblicher Vorteil ist insbesondere, dass die Ladeeinrichtung elektrisch mit der Ladeschnittstelle verbunden ist oder verbindbar ist. Hierdurch kann ein mobiles Gerät besonders vorteilhaft und insbesondere benutzerfreundlich geladen werden. Auch kann hierdurch vorzugsweise gleichzeitig z. B. ein Statussignal, welches bevorzugt Informationen über einen Status der Ladeeinrichtung 106 und/oder des mobilen Gerätes 200 bereitstellt, insbesondere von dem Haushaltgerät eingelesen werden.

Bevorzugt wird das mobile Gerät von wenigstens einem mobilen Endgerät, insbesondere einem Smartphone, Tablet und/oder Laptop bereitgestellt.

Dabei ist unter einem mobilen Endgerät insbesondere ein Mobilgerät und/oder mobile Prozessoreinrichtung wie z. B. ein Smartphone, Tablet, Laptop und/oder Ähnliches zu verstehen.

Vorzugsweise stellt das mobile Endgerät wenigstens eine mobile Steuereinrichtung und/oder Bedieneinrichtung bereit. In zweckmäßigen Weiterbildungen ist das mobile Endgerät dazu geeignet und ausgebildet, das Haushaltgerät zu steuern und/oder zu bedienen. In zweckmäßigen Weiterbildungen umfasst das mobile Endgerät wenigstens eine Ausgabeeinrichtung bzw. Anzeigeeinheit zur Ausgabe und/oder Anzeige wenigstens einer Information und/oder wenigstens eines Signales.

Besonders bevorzugt wird das mobile Gerät von wenigstens einem Akkuhaushaltgerät bereitgestellt.

Dabei ist ein Akkuhaushaltgerät insbesondere ein akkubetriebenes Haushaltgerät wie z. B. ein Flusenrasierer, ein Bügeleisen und/oder, ein Föhn. Auch kann das Akkuhaushaltgerät von einem akkubetriebenem Küchengerät bereitgestellt werden. Vorzugsweise ist das Akkuhaushaltgerät ein smartes und/oder intelligentes Kochgeschirr, wie z. B. ein Topf, eine Pfanne und/oder eine ähnliche Vorrichtung mit wenigstens einem Akku bzw. wenigstens einer reversibel ladbaren Batterie. In vorteilhaften Weiterbildungen wird das Akkuhaushaltgerät von wenigstens einer Rühr-, Mixer-, und/oder Püriereinrichtungen, wie z. B. einem Milchschäumer und/oder einem Mixstab bereitgestellt. Insbesondere ist das Akkuhaushaltgerät wenigstens ein Wasserkocher, ein Reiskocher, ein Waffeleisen, ein Entsafter und/oder Ähnliches. In zweckmäßigen Weiterbildungen kann das Akkuhaushaltgerät auch von wenigstens einer Waage, einem Mahlwerk und/oder einer Pfeffer-/Salzmühle bereitgestellt werden.

In vorteilhaften Weiterbildungen ist wenigstens eine Steuereinrichtung vorgesehen, welche wenigstens einen Status der Ladeeinrichtung und/oder des mobilen Gerätes speichert und/oder auswertet.

Insbesondere wird die Steuereinrichtung von wenigstens einer Elektronikeinrichtung bereitgestellt.

Dabei ist ein Status insbesondere ein Ladestatus des mobilen Gerätes, vorzugsweise wenigstens eine Information über einen Zeitpunkt einer durchgeführten und/oder zukünftigen Wartung des mobilen Gerätes. Auch kann vorzugsweise der Status wenigstens eine Information über ein Wartungsintervall, insbesondere Wechselintervall von wenigstens einem Messer und/oder Ähnlichem des mobilen Gerätes umfassen. Bevorzugt ist ein Status eine Betriebszeit der Ladeeinrichtung und/oder des mobilen Gerätes.

Vorzugsweise ist die Steuereinrichtung von dem Haushaltgerät umfasst. In zweckmäßigen Weiterbildungen wird die Steuereinrichtung von wenigstens einem mobilen Endgerät bereitgestellt.

In zweckmäßigen Weiterbildungen ist das Haushaltgerät ausgebildet, um ein Identitätssignal, welches insbesondere wenigstens eine Identität des mobilen Geräts repräsentiert, über die Ladeschnittstelle oder eine weitere Schnittstelle des Haushaltgeräts einzulesen. Eine solche weitere Schnittstelle kann auch als eine Schnittstelle zur drahtlosen Datenübertragung ausgeführt sein. Dabei kann das Statussignal beispielsweise einen Ladestatus des mobilen Geräts repräsentieren und/oder, wenigstens eine Information über einen Zeitpunkt einer durchgeführten und/oder zukünftigen Wartung des mobilen Gerätes umfassen. Vorteilhafterweise kann das Haushaltgerät das Statussignal verwenden, um eine Bereitstellung von elektrischer Energie zum induktiven Laden des mobilen Geräts über die Ladeschnittstelle zu steuern. Bevorzugt kann das Haushaltgerät das Identitätssignal verwenden, um das mobile Gerät insbesondere über die Ladeschnittstelle zu identifizieren.

Erfindungsgemäß ist das Haushaltgerät ausgebildet, um unter Verwendung des Statussignals ein den Status repräsentierendes Informationssignal an wenigstens eine Schnittstelle zu einer Ausgabeeinrichtung des Haushaltgeräts bereitzustellen.

Dabei kann die Schnittstelle insbesondere von der Ladeschnittstelle und/oder wenigstens einer weiteren Schnittstelle bereitgestellt werden.

Vorzugsweise ist das Haushaltgerät dazu geeignet und ausgebildet, das Statussignal und/oder das Informationssignal an wenigstens eine mobile Anzeige-/Bedien-/Steuereinrichtung, insbesondere das mobile Endgerät zu senden. Bevorzugt ist die Ausgabeeinrichtung von dem Haushaltgerät und/ oder einem mobilen Endgerät umfasst.

Das Informationssignal kann geeignet sein, um eine Bereitstellung eines akustischen oder optischen Signals durch die Ausgabeeinrichtung zu steuern. Beispielsweise kann dem Nutzer damit ein Status oder ein Abschluss eines Ladevorgangs angezeigt werden, es kann ein Timer dargestellt oder es kann eine zum Laden geeignete Positionierung des mobilen Gerätes visuell oder akustisch bestätigt werden. Beispielsweise kann dazu ein Ton, eine Tonfolge und zusätzlich oder alternativ ein Lichtsignal ausgegeben werden. Die Ausgabeeinrichtung kann entsprechend als ein Lautsprecher oder als ein Leuchtmittel ausgeführt sein, wie beispielsweise eine Leuchtdiode.

Beispielsweise kann die Ausgabeeinrichtung eine Anzeigeeinheit zum Anzeigen eines Bildes und zusätzlich oder alternativ eines Symbols umfassen. Die Anzeigeeinheit kann beispielsweise als berührungsempfindliches Display ausgeformt sein, das optional eine Bedienung des mobilen Geräts über das Haushaltgerät ermöglicht.

Besonders bevorzugt ist das Haushaltgerät dazu geeignet und ausgebildet, zur Benutzung freigegeben zu werden, wenn das Haushaltgerät das mobile Gerät mittels des Identitätssignals erkennt und/oder identifiziert.

Vorzugsweise wird das Haushaltgerät insbesondere zur Benutzung durch einen Benutzer freizugeben, wenn das Haushaltgerät das mobile Gerät mittels des Identitätssignals erkennt und/oder identifiziert. So kann z. B. das mobile Gerät als eine Art Sicherheitsschlüssel für das Haushaltgerät dienen, sodass das Haushaltgerät nur dann in einen Betriebszustand versetzt werden kann, wenn das mobile Gerät mittels des Identitätssignals erkannt und/oder identifiziert wird, vorzugsweise das mobile Gerät im Ladebereich der Ladeeinrichtung angeordnet und/oder positioniert ist. Je nach Aufgabe und Ausgestaltung ist es auch möglich, dass das mobile Gerät als eine Art Sicherheitsschlüssel für vorbestimmte Einstellungen und/oder Ablaufprogramme des Haushaltgerät dient, sodass das vorbestimmte Einstellungen und/oder Ablaufprogramme nur dann ausführbar und/oder vornehmbar sind, wenn das mobile Gerät mittels des Identitätssignals erkannt und/oder identifiziert wird, vorzugsweise das mobile Gerät im Ladebereich der Ladeeinrichtung angeordnet und/oder positioniert ist. Gemäß einer Ausführungsform kann das Haushaltgerät ausgebildet sein, um eine Ladeenergie zum Laden des mobilen Geräts an die Ladeschnittstelle bereitzustellen, wenn das mobile Gerät mit der Ladeeinrichtung gekoppelt ist. Beispielsweise kann das Statussignal anzeigen, dass das mobilen Gerät mit der Ladeeinrichtung gekoppelt ist, sodass die Ladeenergie an die Ladeschnittstelle bereitgestellt werden kann. Vorteilhafterweise benötigt die Ladeeinrichtung zum Laden des mobilen Gerätes keinen eigenen Netzanschluss, da die Ladeenergie beispielsweise von einer Energieversorgungseinrichtung des Haushaltgeräts bereitgestellt werden kann.

Die Ladeeinrichtung kann mittels eines Verbindungskabels mit dem Haushaltgerät elektrisch verbunden sein. Ladeeinrichtung und Haushaltgerät können über das Verbindungskabel festverdrahtet sein. Vorteilhafterweise kann das Verbindungskabel für den Nutzer nicht sichtbar und nicht handhabbar verlegt sein.

Das Haushaltgerät kann als ein Einbaugerät ausgeführt sein. Das Haushaltgerät kann beispielsweise als ein Küchengerät ausgeformt sein, das beispielsweise in eine Küchenzeile eingebaut werden kann, wie beispielsweise ein Gargerät oder wie ein Kochfeld.

Gemäß einer Ausführungsform kann die Haushaltvorrichtung wenigstens eine Arbeitsplatte aufweisen, wobei die Ladeeinrichtung an der Arbeitsplatte angeordnet sein kann, um das Laden des mobilen Geräts zu ermöglichen, wenn das mobile Gerät auf der Arbeitsplatte abgelegt ist. Das Haushaltgerät kann beispielsweise als Kochfeld in die Arbeitsplatte eingelassen sein, sodass vorteilhafterweise während eines Kochvorgangs das Gerät unter Verwendung der mit dem Haushaltgerät verbundenen Ladeeinrichtung geladen werden kann. Die Ladeeinrichtung kann dabei beispielsweise in die Arbeitsplatte integriert sein oder beispielsweise an einer Rückseite der Arbeitsplatte angeordnet sein. Die Ladeeinrichtung kann dabei unbeweglich mit der Arbeitsplatte verbunden sein, beispielsweise verschraubt.

Die Haushaltvorrichtung kann ein Einbauelement aufweisen, wobei die Ladeeinrichtung oder eine weitere entsprechend ausgeführte Ladeeinrichtung in dem Einbauelement modular angeordnet oder anordenbar sein kann. Das Einbauelement kann beispielsweise ein zu einer Küchenzeile gehörender Einbauschrank sein oder beispielsweise ein Einschub dafür. Dadurch kann das mobile Gerät während des Aufladens an einer sicheren Position angeordnet sein. Vorzugsweise ist das Einbauelement als eine Schublade ausgebildet und/oder stellt wenigstens abschnittsweise/teilweise eine Schublade, vorzugsweise Standardschublade, insbesondere nach bekanntem Küchenraster bereit.

Gemäß einer Ausführungsform kann das Einbauelement verfahrbar ausgeführt sein. Vorteilhafterweise kann das Einbauelement als eine Schublade ausgeführt sein, deren Abmessungen und beispielsweise Positionierung in der Küche von einem Nutzer wählbar sind. Vorteilhafterweise könne von einer entsprechenden Schublade auch mehrere zu ladende mobile Geräte aufgenommen werden.

Bei dem erfindungsgemäße Verfahren zum Betreiben einer Haushaltvorrichtung, wie sie zuvor beschrieben ist, werden folgende Schritte ausgeführt: Einlesen wenigstens eines Statussignals und/oder wenigstens eines Identitätssignals der Ladeeinrichtung und/oder des mobilen Geräts über die Ladeschnittstelle; und Bereitstellen wenigstens einer Ladeenergie zum induktiven Laden des mobilen Geräts an die Ladeschnittstelle, wenn das mobile Gerät mit der Ladeeinrichtung gekoppelt ist.

Dabei wird das mobile Gerät insbesondere von wenigstens einem mobilen Endgerät und/oder wenigstens einem Akkuhaushaltgerät bereitgestellt.

Vorzugsweise repräsentiert ein Statussignal wenigstens den Status der Ladeeinrichtung und/oder des mobilen Geräts. Dabei ist ein Status insbesondere ein Ladestatus des mobilen Gerätes, vorzugsweise wenigstens eine Information über einen Zeitpunkt einer durchgeführten und/oder zukünftigen Wartung des mobilen Gerätes. Auch kann vorzugsweise der Status wenigstens eine Information über ein Wartungsintervall, insbesondere Wechselintervall von wenigstens einem Messer und/oder Ähnlichem des mobilen Gerätes umfassen. Bevorzugt ist ein Status eine Betriebszeit der Ladeeinrichtung und/oder des mobilen Gerätes. Vorzugsweise ist ein Status wenigstens eine Information, insbesondere über den momentanen Zustand der Ladeeinrichtung und/oder des mobilen Gerätes.

Bevorzugt wird das Statussignals und/oder das Identitätssignals der Ladeeinrichtung und/oder des mobilen Geräts über eine Schnittstelle des Haushaltgeräts einzulesen. Vorzugsweise ist eine solche Schnittstelle dazu geeignet und ausgebildet, das Statussignals und/oder das Identitätssignals drahtlos zu übertragen.

Vorteilhafterweise kann das Haushaltgerät das Statussignal verwenden, um eine Bereitstellung von elektrischer Energie zum induktiven Laden des mobilen Geräts über die Ladeschnittstelle zu steuern.

In vorteilhaften Weiterbildungen repräsentiert das Identitätssignal wenigstens eine Identität des mobilen Geräts. Bevorzugt kann das Haushaltgerät das Identitätssignal verwenden, um das mobile Gerät insbesondere über die Ladeschnittstelle zu identifizieren.

Auch das erfindungsgemäße Verfahren weist die Vorteile der erfindungsgemäßen Haushaltvorrichtung auf.

Besonders bevorzugt wird bei dem Verfahren zum Betreiben einer Haushaltvorrichtung wenigsten eine den Status des mobilen Gerätes repräsentierende Information mittels einer Ausgabeeinrichtung des Haushaltgeräts und/oder mittels einer separaten Einrichtung angezeigt.

Dabei wird die separate Einrichtung insbesondere von einem mobilen Endgerät bereitgestellt.

In zweckmäßigen Weiterbildungen wird wenigstens eine den Status des mobilen Gerätes repräsentierende Information, insbesondere Warnung über einen unzureichenden Ladestatus des mobilen Gerätes angezeigt. Vorzugsweise wird Insbesondere die den Status des mobilen Gerätes repräsentierende Information angezeigt, wenn ein Benutzer das Haushaltgerät einschaltet und/oder ein Ablaufprogramm, insbesondere Kochprogramm auswählt.

Vorzugsweise wird wenigsten eine den Status des mobilen Gerätes repräsentierende Information an einer Schnittstelle zu einer Ausgabeeinrichtung des Haushaltgeräts bereitgestellt.

Bevorzugt wird das Verfahren ausgelöst, wenn das mobile Gerät mit der Ladeeinrichtung gekoppelt wird, sodass das mobile Gerät autark mittels Induktion geladen werden kann.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise in Verbindung mit einem in der Gastronomie verwendeten Gerät eingesetzt werden.

Ein Ausführungsbeispiel der Erfindung ist in den Zeichnungen rein schematisch dargestellt und wird nachfolgend näher beschrieben. Es zeigt
- Figur 1: eine rein schematische Darstellung einer Haushaltvorrichtung gemäß einem Ausführungsbeispiel;
- Figur 2: eine rein schematische Darstellung eines Ausführungsbeispiels einer Haushaltvorrichtung;
- Figur 3: eine rein schematische Darstellung eines Ausführungsbeispiels einer Haushaltvorrichtung;
- Figur 4: eine rein schematische Seitendarstellung eines Ausführungsbeispiels einer Haushaltvorrichtung;
- Figur 5: eine rein schematische Darstellung eines Ausführungsbeispiels einer Haushaltvorrichtung; und
- Figur 6: eine rein schematische Schnittdarstellung eines Ausführungsbeispiels einer Haushaltvorrichtung.

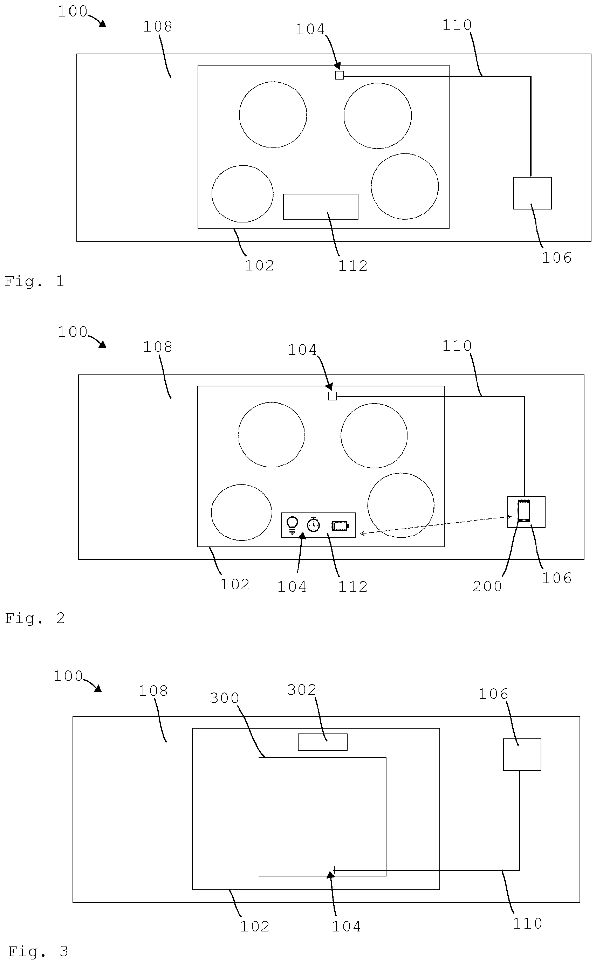

Figur 1 zeigt eine schematische Darstellung einer Haushaltvorrichtung 100 gemäß einem Ausführungsbeispiel. Die Haushaltvorrichtung 100 weist dabei ein Haushaltgerät 102 mit einer Ladeschnittstelle 104 und eine Ladeeinrichtung 106 zum induktiven Laden eines mobilen Gerätes 200 auf. In dem in Figur 1 rein schematisch gezeigten betriebsbereiten Zustand der Haushaltvorrichtung 100 ist die Ladeeinrichtung 106 elektrisch mit der Ladeschnittstelle 104 verbunden, beispielsweise festverdrahtet. Die Ladeeinrichtung 106 ermöglicht als integraler Bestandteil der Haushaltvorrichtung 100 das Aufladen eines mobilen Geräts, wenn das mobile Gerät 200 im Bereich der Ladeeinrichtung 106 platziert wird. Beispielsweise kann das Aufladen erfolgen, während das Haushaltgerät 102 in Betrieb ist. Die Haushaltvorrichtung 100 ist beispielsweise als Teil einer Küchenzeile realisiert, wie sie in Haushalten üblich ist. Beispielsweise ist das Haushaltgerät 102 als ein Einbaugerät ausgeführt, hier beispielhaft als ein Kochfeld mit vier Kochzonen.

Gemäß einem Ausführungsbeispiel weist die Haushaltvorrichtung 100 optional eine Arbeitsplatte 108 auf. Beispielhaft ist das Haushaltgerät 102 in die Arbeitsplatte 108 eingelassen. Die Ladeeinrichtung 106 ist dabei an der Arbeitsplatte 108 angeordnet, um das Laden des mobilen Gerätes 200 zu ermöglichen, wenn dieses auf der Arbeitsplatte 108 abgelegt ist. Beispielsweise ist die Ladeeinrichtung 106 dabei an einer für einen Nutzer nicht sichtbaren Rückseite der Arbeitsplatte 108 fest montiert. Alternativ ist die Ladeeinrichtung 106 beispielsweise in die Arbeitsplatte 108 integriert. Gemäß einem Ausführungsbeispiel ist die Ladeeinrichtung 106 für einen Nutzer nicht handbar, also beispielsweise nicht verschiebbar, angeordnet.

In dem hier dargestellten Ausführungsbeispiel ist das Haushaltgerät 102 dazu ausgeführt, um eine Ladeenergie zum Laden des mobilen Geräts 200 an die Ladeschnittstelle 104 bereitzustellen. Gemäß einem Ausführungsbeispiel weist die Haushaltvorrichtung 100 ein Verbindungskabel 110 auf, das verwendet wird, um die Ladeeinrichtung 106 mit dem Haushaltgerät 102 elektrisch zu verbinden. Das Verbindungskabel 110 ist beispielsweise während der Montage der Haushaltvorrichtung 100 lösbar oder unlösbar mit der Ladeschnittstelle 104 verbunden worden.

In dem hier dargestellten Ausführungsbeispiel weist das Haushaltgerät 102 eine hier als Anzeigeeinheit 112 ausgeführte Ausgabeeinrichtung 302 auf, die hier ausgebildet ist, um ein Bild und/oder ein Symbol anzuzeigen. Beispielsweise ist die Anzeigeeinheit 112 als ein Display realisiert. Optional weist die Anzeigeeinheit 112 eine Eingabeschnittstelle auf, sodass die Anzeigeeinheit 112 beispielsweise auch als berührungsempfindliches Display ausgeformt sein kann. Die Anzeigeeinheit 112 ist insbesondere ausgebildet, um mindestens eine Geräteinformation des mit der Ladeeinrichtung 106 gekoppelten mobilen Gerätes anzuzeigen. Die Geräteinformation repräsentiert beispielsweise einen Ladestatus des mobilen Gerätes und/oder einen Timer, sodass ein Nutzer bezüglich ebendieser Geräteinformation über die Anzeigeeinheit 112 des Haushaltgeräts 102 informiert werden kann.

Die Haushaltvorrichtung 100 stellt hier ein autarkes induktives Ladesystem für ein mobiles Geräte 200 bereit. Dies ist vorteilhaft, da eine Anzahl von mobilen Geräten mit autonomer Energieversorgung stetig steigt. So wird ein mobiles Gerät häufig von einem mobilen Endgerät, wie beispielsweise einem Smartphone, Mobiltelefone, Tablet und/oder einer Smartwatch oder einem Akkuhaushaltgerät, wie beispielsweise einem akkubetriebenen Mixer, Rührgerät und/oder Flusenrasierer, bereitgestellt. Alle diese mobilen Geräte werden regelmäßig mit Energie für ihren Betrieb aufgeladen. Dieses erfordert üblicherweise eine 230V Steckdose und ein individuelles entsprechendes Ladekabel. Somit ist es durchaus möglich, dass z. B. in einer 4-köpfigen Familie, bis zu 10 mobile Geräte dieser Art vorliegen, sodass eine entsprechende Anzahl von Steckdosen erforderlich ist und ein "Kabelsalat" vorprogrammiert ist. Der zentrale Lebensraum der Küche rückt zudem immer mehr in den Vordergrund und insbesondere hier kommt es häufig zur beschriebenen Situation, da beispielsweise das als Handy bezeichnete Smartphone immer häufiger in den Kochprozess einbezogen wird, indem beispielsweise kochbezogene Applikationen (Apps) zum Bereitstellen von Rezepten, cookAssist oder geführtes Kochen und/oder eine Timerfunktion verwendet werden, oder da beispielsweise Social Networking während des Kochens an Bedeutung gewinnt.

Vor diesem Hintergrund ist die auch als Ladesystem bezeichnete Ladeeinrichtung 106 direkt in Küchengeräte verbaubar, in Figur 1 verbaut dargestellt, und somit als ein interner Teil der Haushaltvorrichtung 100 ausgeformt. Die Ladeeinrichtung 106 ist beispielsweise als induktive Ladeeinrichtung 106 oder beispielsweise als ein Zubehörteil für Haushaltgeräte 102 realisiert oder realisierbar, das ein autarkes induktives Laden von wenigstens einem mobilen Gerät 200 ermöglicht. Zum induktiven Laden weist die Ladeeinrichtung 106 gemäß einem Ausführungsbeispiel zumindest eine Spule auf.

Durch den vorgestellten Ansatz und der entsprechenden Positionierung der Ladeeinrichtung 106, die beispielsweise in, an oder unter der Arbeitsplatte 108 oder beispielsweise in einen Küchenschrank integriert ist, wird erreicht, dass die Arbeitsfläche der Arbeitsplatte 108 frei bleibt. Des Weiteren ist die Ladeeinrichtung 106 beispielsweise optisch nicht zu erkennen und vollständig in die Küche integriert oder integrierbar. Ein optisches und/oder akustisches Signal zum Ladestand des mobilen Gerätes erfolgt beispielsweise über das Haushaltgerät 102, das auch als ein Einbaugerät ausgeführt sein kann. Somit liegt die Ladeschnittstelle 104, die beispielsweise auch als Kommunikationsschnittstelle ausgeführt sein kann, über das Haushaltgerät 102 vor.

Die Ladeeinrichtung 106, die auch als Zubehörteil bezeichnet wird, ist beispielsweise mit der definierten Ladeschnittstelle 104 an das Haushaltgerät 102 angeschlossen. Die Ladeeinrichtung 106 wird mit Energie und/oder Daten von und zu dem Haushaltgerät 102 versorgt.

Beispielsweise ist eine Kabelführung zwischen Haushaltgerät 102 und induktiver Ladeeinrichtung 106 für den Nutzer nicht sichtbar. Das bedeutet, dass das Verbindungskabel 110 derart angeordnet ist, sodass es in verbautem Zustand der Haushaltvorrichtung 100 dem Nutzer abgewandt ist. Die Ladeeinrichtung 106 ist weiterhin frei positionierbar und nimmt keinen aktiven Verwendungsplatz des Haushaltgerätes 102 ein.

Gemäß einem Ausführungsbeispiel ist die Ladeeinrichtung 106 von einem Küchenbauer oder Planer frei und unsichtbar in der Haushaltvorrichtung 100 positionierbar. Die Ladeeinrichtung 106 kann dabei ein Teil bekannter Küchenplanerprogramme sein und direkt in der Küchenplanung mitberücksichtigt werden. Die Kabelführung zwischen Haushaltgerät 102 und der als induktive Ladestation dienenden Ladeeinrichtung 106 ist im montierten Zustand der Ladeeinrichtung 106 gemäß einem Ausführungsbeispiel für einen Nutzer nicht sichtbar verlegt. Eine Arbeitsfläche kann somit frei von stromführenden Kabeln gehalten werden. Zudem ist eine Elektronik der Ladeeinrichtung 106 von jeglichen äußeren Einflüssen, wie Feuchtigkeit oder Fett maximal geschützt anordenbar.

Eine der Ladeeinrichtung 106 zugeordnete Ladezone ist optional durch Aufdrucke, Fräsungen oder Kennzeichnungen erkennbar gestaltet. Wenn sich ein mobiles Gerät 200 der Ladezone nähert, wird dies optional visuell oder akustisch bestätigt. Vorteilhafterweise kann eine entsprechende Ladezone ergonomisch optimiert angeordnet sein. Das sich daraus ergebende Ladesystem mit Sensor bieten dem Nutzer optional smarte Funktionen an und erweitert optional den Einsatz eines bekannten induktiven Ladesystems, beispielsweise durch sicherheitsrelevante Funktionen.

Figur 2 zeigt eine schematische Darstellung eines Ausführungsbeispiels einer Haushaltvorrichtung 100. Die Haushaltvorrichtung 100 ähnelt beispielsweise der in Figur 1 beschriebenen Haushaltvorrichtung 100. Gemäß diesem Ausführungsbeispiel ist zusätzlich ein mobiles Gerät 200 dargestellt, welches hier von einem mobilen Endgerät 201, wie beispielsweise einem Smartphone bereitgestellt wird. Dabei ist hier das mobile Gerät mit der Ladeeinrichtung 106 gekoppelt. Alternativ kann ein als mobiles Endgerät 201 ausgeführtes mobile Gerät 200 beispielsweise auch als ein Tablet, eine Smartwatch oder als ein anderes mobiles Gerät realisierbar sein. Je nach Aufgabe und Ausführung kann das mobile Gerät 200 auch von einem Akkuhaushaltgerät, wie z. B. einem akkubetriebenen smarten Kochgeschirr bereitgestellt werden. Weiterhin zeigt die hier als Anzeigeeinheit 112 ausgeführte Ausgabeeinrichtung 302 gemäß diesem Ausführungsbeispiel mindestens einen Status des mobilen Gerätes 200 bzw. hier eine Geräteinformation 202 an, welche hier von dem mobilen Gerät 200 zur Anzeige durch die Anzeigeeinheit 112 bereitgestellt wurde. Die Geräteinformation 202 repräsentiert beispielsweise einen Ladestatus des mobilen Geräts 200 oder einen Timer. Alternativ zeigt die Anzeigeeinheit 112 beispielsweise eine Statusleuchte an, die mit dem Ladestatus gekoppelt ist und beispielsweise eine elektrische Verbindung zu dem mobilen Gerät 200 repräsentiert. Je nach Aufgabe und Ausführung kann die hier als Anzeigeeinheit 112 ausgeführte Ausgabeeinrichtung 302 auch einen Status der Ladeeinrichtung 106 anzeigen.

Beispielsweise wird ein die Geräteinformation 202 umfassendes Signal über die Ladeschnittstelle 104 oder alternativ drahtlos zwischen dem mobilen Gerät 200 und dem Haushaltgerät 102 übertragen.

Figur 3 zeigt eine schematische Darstellung eines Ausführungsbeispiels einer Haushaltvorrichtung 100. Die Haushaltvorrichtung 100 entspricht oder ähnelt beispielsweise der in einer der Figuren 1 bis 2 beschriebenen Haushaltvorrichtung 100. Gemäß diesem Ausführungsbeispiel ist lediglich eine Unterseite der Haushaltvorrichtung 100 dargestellt, die in einem verbauten Zustand der Haushaltvorrichtung 100 dem Nutzer abgewandt angeordnet ist. Die Haushaltvorrichtung 100, genauer gesagt das Haushaltgerät 102 weist beispielsweise eine Elektronikeinrichtung 300 auf, die hier mit der Ladeeinrichtung 106 unter Verwendung des Verbindungskabels 110 über die Ladeschnittstelle 104 gekoppelt ist. Die Elektronikeinrichtung 300 ist gemäß einem Ausführungsbeispiel ausgebildet, um eine Funktion des Haushaltgeräts 102 zu steuern, beispielsweise Heizeinrichtungen des Hausaltgeräts 102 zu bestromen. Je nach Aufgabe und Ausführung kann die Elektronikeinrichtung 300 wenigstens eine Steuereinrichtung 301, eine Bedieneinrichtung und/oder eine Anzeigeeinrichtung bereitstellen und/oder umfassen. Auch ist es hier möglich, dass die Elektronikeinrichtung 300, insbesondere eine Steuereinrichtung wenigstens einen Status der Ladeeinrichtung 106 und/oder des mobilen Gerätes 200 speichert und/oder auswertet.

Das Haushaltgerät 102 ist beispielsweise ausgebildet, um ein Statussignal über die Ladeschnittstelle 104 einzulesen, das einen Status der Ladeeinrichtung 106 oder des mobilen Geräts repräsentiert. Je nach Aufgabe und Ausführung kann das Haushaltgerät 100 auch dazu ausgebildet sein, um ein Identitätssignal über die Ladeschnittstelle 104 einzulesen, welches wenigstens eine Identität des mobilen Geräts 200 repräsentiert.

Unter Verwendung des Statussignals wird beispielsweise ein den Status repräsentierendes Informationssignal an eine Schnittstelle zu einer Ausgabeeinrichtung 302 des Haushaltgeräts 102 bereitgestellt. Die Ausgabeeinrichtung 302 ist beispielsweise als ein Lautsprecher oder als ein Leuchtmittel realisierbar oder weist den Lautsprecher und/oder das Leuchtmittel auf. Je nach Aufgabe und Ausführung kann die Ausgabeeinrichtung 302 auch eine Anzeigeeinheit 112 bereitstellen. Lediglich optional wird das Informationssignal beispielsweise als ein akustisches oder visuelles Signal ausgegeben, beispielsweise unter Verwendung eines mit dem Haushaltgerät 102 verbundenen Lautsprechers und/oder mittels der Anzeigeeinheit des Haushaltgeräts 102. Je nach Aufgabe und Ausführung kann das Informationssignal beispielsweise auch ausschließlich und/oder zusätzlich unter Verwendung eines Lautsprechers und/oder mittels einer Anzeigeeinheit eines mobilen Endgeräts 201, wie z. B. einem Smartphone ausgegeben werden. Hierzu kann beispielsweise das Informationssignal von dem Haushaltgerät 102 an das mobile Endgerät 201 übermittelt und/oder gesendet werden. Beispielsweise wird der Nutzer der Haushaltvorrichtung 100 mittels eines Tons über beispielsweise ein Ende des Ladevorgangs eines mobilen Gerätes 200 informiert. Lediglich optional wird das Statussignal von der Elektronikeinrichtung 300 eingelesen.

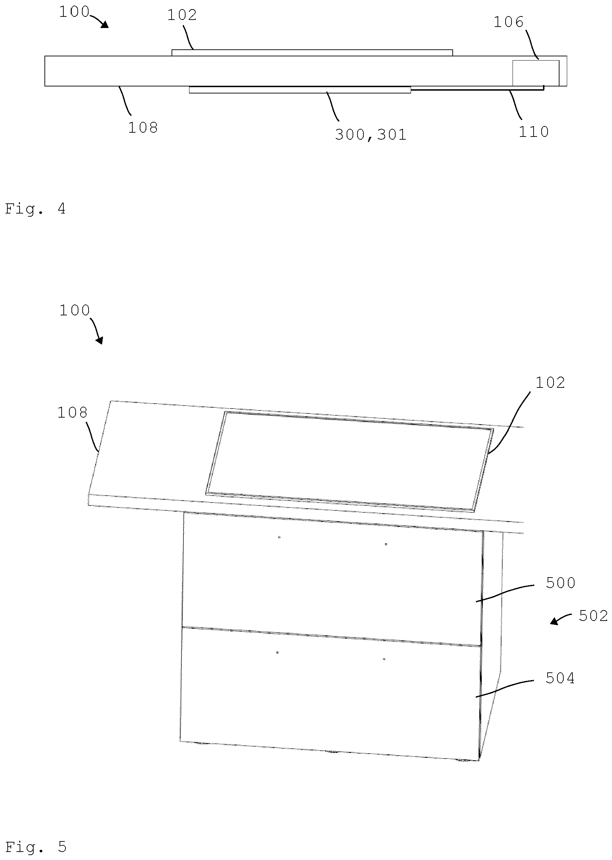

Figur 4 zeigt eine schematische Seitendarstellung eines Ausführungsbeispiels einer Haushaltvorrichtung 100. Die in Figur 4 dargestellte Haushaltvorrichtung 100 entspricht beispielsweise der in einer der Figuren 1 bis 3 beschriebenen Haushaltvorrichtung 100. Gemäß diesem Ausführungsbeispiel ist das Haushaltgerät 102 als Kochfeld ausgeformt, das an der Arbeitsplatte 108 angeordnet oder in die Arbeitsplatte 108 eingelassen ist. Gemäß diesem Ausführungsbeispiel ist die Ladeeinrichtung 106 in eine Aussparung der Arbeitsplatte 108 integriert und rückseitig der Arbeitsplatte 108 mit dem Haushaltgerät 102, genauer gesagt mit der Elektronikeinrichtung 300 des Haushaltgeräts 102 elektrisch unter Verwendung des Verbindungskabels 110 verbunden. Die Elektronikeinrichtung 300 ist beispielsweise als ein Generator oder als eine Steuereinrichtung 301 bzw. Steuereinheit des Haushaltgeräts 102 ausgeführt.

Figur 5 zeigt eine schematische Darstellung eines Ausführungsbeispiels einer Haushaltvorrichtung 100. Die Haushaltvorrichtung 100 entspricht oder ähnelt beispielsweise der in einer der Figuren 1 bis 4 beschriebenen Haushaltvorrichtung 100. Gemäß diesem Ausführungsbeispiel weist die Haushaltvorrichtung 100 ein Einbauelement 500 auf, das beispielsweise verfahrbar als eine Schublade ausgeformt und/oder ausgebildet ist. Die hier nicht näher dargestellte Ladeeinrichtung 106 ist gemäß diesem Ausführungsbeispiel in dem Einbauelement 500 modular angeordnet, sodass beispielsweise Abmessungen oder Formen des Einbauelements 500 unterschiedlich realisierbar sind. Das Einbauelement 500 ist gemäß diesem Ausführungsbeispiel als Teil eines Küchenmoduls 502 realisiert, das zusätzlich zu dem Einbauelement 500 ein weiteres Einbauelement 504 aufweist. Das Küchenmodul 502 ist dabei hier als ein Einbauschrank realisiert.

Optional ist eine weitere Ladeeinrichtung 106, wie anhand der vorangegangenen Figuren beschrieben, an der Arbeitsplatte 108 angeordnet.

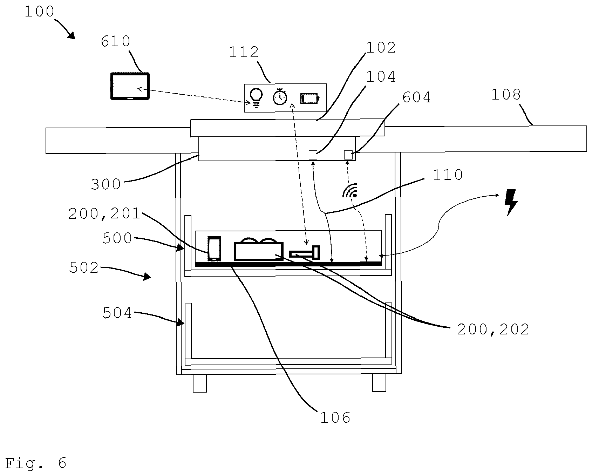

Figur 6 zeigt eine schematische Schnittdarstellung eines Ausführungsbeispiels einer Haushaltvorrichtung 100. Die Haushaltvorrichtung 100 entspricht oder ähnelt beispielsweise der in einer der Figuren 1 bis 5 beschriebenen Haushaltvorrichtung 100, insbesondere der in Figur 5 beschriebenen Haushaltvorrichtung. Gemäß diesem Ausführungsbeispiel ist die Haushaltvorrichtung 100 in verbautem Zustand dargestellt. Die Ladeeinrichtung 106 ist hier mit der Elektronikeinrichtung 300, welche hier eine Steuereinrichtung bereitstellt, beispielsweise unter Verwendung des Verbindungskabels 110 und der Ladeschnittstelle 104 elektrisch verbunden, sodass hier das mindestens eine mobile Gerät 200 elektrisch mittels Induktion aufgeladen werden kann.

Optional weist die Ladeeinrichtung 106 gemäß einem Ausführungsbeispiel solche Abmessungen auf, dass eine Mehrzahl von mobilen Geräten 200 zeitgleich unter Verwendung der Ladeeinrichtung 106 geladen werden können. Beispielhaft ist die Ladeeinrichtung 106 passgenau oder annähernd passgenau in dem Einbauelement 500 schubladenartig angeordnet.

In dem hier dargestellten Ausführungsbeispiel sind mehrere mobile Geräte 200 auf der Ladeeinrichtung 106 positioniert, sodass hier die mobilen Geräte 200 mittels der Ladeeinrichtung 106 induktiv ladbar sind. Dabei ist hier ein mobiles Gerät 200 als ein mobiles Endgerät 201 und zwei weitere mobile Geräte 200 jeweils als ein Akkuhaushaltgerät ausgeführt.

In dem hier dargestellten Ausführungsbeispiel stellt eines der mobilen Geräte 200 einen Sicherheitsschlüssel für das Haushaltgerät 102 bereit, sodass das Haushaltgerät 102 nur dann in einen Betriebszustand versetzt werden kann, wenn das mobile Gerät 200 mittels eines Identitätssignals erkannt und/oder identifiziert wird. Dabei wird hier ein mobiles Gerät 200 mittels des Identitätssignals erkannt, wenn es im Ladebereich der Ladeeinrichtung 106 angeordnet und/oder positioniert ist. Je nach Aufgabe und Ausführung ist es auch möglich, dass das mobile Gerät als eine Art Sicherheitsschlüssel für vorbestimmte Einstellungen und/oder Ablaufprogramme des Haushaltgerät 102 dienen, sodass die vorbestimmte Einstellungen und/oder die Ablaufprogramme nur dann ausführbar sind, wenn das mobile Gerät mittels des Identitätssignals erkannt und/oder identifiziert wird.

In dem hier dargestellten Ausführungsbeispiel ist das Haushaltgerät 102 dazu geeignet und ausgebildet, nur dann zur Benutzung freigegeben zu werden, wenn das Haushaltgerät 102 das mobile Gerät 200 mittels des Identitätssignals erkennt und/oder identifiziert.

Das Haushaltgerät 102 weist optional eine hier als Anzeigeeinheit 112 ausgeführte Ausgabeeinrichtung auf, die gemäß diesem Ausführungsbeispiel lediglich aus Darstellungszwecken oberhalb des Haushaltgeräts 102 dargestellt ist und wie in Figur 5 beschrieben flächig an dem Haushaltgerät 102 angeordnet oder in das Haushaltgerät 102 integriert sein kann.

Lediglich optional ist die Ladeeinrichtung 106 drahtlos über eine weitere Schnittstelle 604 des Haushaltgeräts 102 mit der Elektronikeinrichtung 300 verbunden, beispielsweise unter Verwendung eines W-LANs. Gemäß einem Ausführungsbeispiel kann das Gerät oder können die mobilen Geräte 200 drahtlos mit der dem Haushaltgerät 102 kommunizieren, wobei entsprechende drahtlos übertragene Informationen unter Verwendung der Anzeigeeinheit 112 angezeigt werden können. Beispielsweise kann hier wenigstens eines der mobilen Geräte 200 einen Status und/oder eine Geräteinformation 202 an das Haushaltgerät 102 bereitstellen, wobei hier der Status und/oder die Geräteinformation unter Verwendung der Anzeigeeinheit 112 dargestellt werden kann.

In dem hier dargestellten Ausführungsbeispiel ist das Haushaltgerät 102 optional mit mindestens einer separaten Einrichtung 610, wie z. B. einem mobilen Endgerät unter Verwendung einer drahtlosen Verbindung koppelbar, sodass die auf der Anzeigeeinheit 112 angezeigten Geräteinformationen 202 beispielsweise zusätzlich oder auch ausschließlich auf die separate Einrichtung 610 übertragen werden können, um dort dargestellt zu werden. Auch kann je nach Aufgabe und Ausführung das Haushaltgerät 102 und/oder die Ladestation 106 mittels der separaten Einrichtung, beispielsweise einem mobilen Endgerät 201 schaltbar und/oder steuerbar sein.

Die in den Figuren 1 bis 6 rein schematisch dargestellten Ausführungsbeispiele einer erfindungsgemäßen Haushaltvorrichtung 100 sind hier dazu geeignet und ausgeführt, das erfindungsgemäße Verfahren zum Betreiben einer Haushaltvorrichtung 100 auszuführen. Dazu wird hier ein Statussignal und/oder ein Identitätssignal der Ladeeinrichtung 106 und/oder des mobilen Geräts 200 über die Ladeschnittstelle 104 eingelesen und hier einer Ladeenergie zum induktiven Laden des mobilen Geräts 200 an die Ladeschnittstelle 104 bereitgestellt, wenn das mobile Gerät 200 mit der Ladeeinrichtung 106 gekoppelt ist.

Auch kann in den hier dargestellten Ausführungsbeispielen eine den Status des mobilen Gerätes 200 repräsentierende Information mittels einer Ausgabeeinrichtung 302 des Haushaltgeräts 102 und/oder mittels einer separaten Einrichtung, wie z. B. einem Smartphone, einem Tablet und/oder einer Smartwatch angezeigt werden.

### Bezugszeichenliste

- 100: Haushaltvorrichtung
- 102: Haushaltgerät
- 104: Ladeschnittstelle
- 106: Ladeeinrichtung
- 108: Arbeitsplatte
- 110: Verbindungskabel
- 112: Anzeigeeinheit
- 200: mobiles Gerät
- 201: mobiles Endgerät
- 202: Geräteinformationen
- 203: Akkuhaushaltgerät
- 300: Elektronikeinrichtung
- 301: Steuereinrichtung
- 302: Ausgabeeinrichtung
- 500: Einbauelement
- 502: Küchenmodul
- 504: Einbauelement
- 604: Schnittstelle
- 610: separate Einrichtung

## Patentansprüche

1. Haushaltvorrichtung (100) mit den folgenden Merkmalen:
einem Haushaltgerät (102) mit einer Ladeschnittstelle (104); und
eine Ladeeinrichtung (106) zum induktiven Laden eines mobilen Gerätes (200), wobei die Ladeeinrichtung (106) elektrisch mit der Ladeschnittstelle (104) verbunden oder verbindbar ist, wobei das Haushaltgerät (102) ausgebildet ist, um zumindest ein Statussignal, welches wenigstens den Status der Ladeeinrichtung (106) und/oder des mobilen Geräts (200) repräsentiert, über die Ladeschnittstelle (104) oder eine weitere Schnittstelle (604) des Haushaltgeräts (102) einzulesen, wobei das Haushaltgerät (102) ausgebildet ist, um unter Verwendung des Statussignals ein den Status repräsentierendes Informationssignal an wenigstens einer Schnittstelle zu wenigstens einer Ausgabeeinrichtung (302) des Haushaltgeräts (102) bereitzustellen.

2. Haushaltvorrichtung (100) gemäß Anspruch 1, wobei das mobile Gerät (200) von wenigstens einem mobilen Endgerät (201), insbesondere einem Smartphone, Tablet und/oder Laptop bereitgestellt wird.

3. Haushaltvorrichtung (100) gemäß Anspruch 1, wobei das mobile Gerät (200) von wenigstens einem Akkuhaushaltgerät (203) bereitgestellt wird.

4. Haushaltvorrichtung (100) gemäß einem der vorangegangenen Ansprüche, wobei wenigstens eine Steuereinrichtung (301) vorgesehen ist, welche wenigstens einen Status der Ladeeinrichtung (106) und/oder des mobilen Gerätes (200) speichert und/oder auswertet.

5. Haushaltvorrichtung (100) gemäß einem der vorangegangenen Ansprüche, wobei das Haushaltgerät (102) ausgebildet ist, um zumindest ein Identitätssignal, welches wenigstens eine Identität des mobilen Geräts (200) repräsentiert, über die Ladeschnittstelle (104) oder eine weitere Schnittstelle (604) des Haushaltgeräts (102) einzulesen.

6. Haushaltvorrichtung (100) gemäß dem vorangegangenen Anspruch 5, wobei das Haushaltgerät (102) dazu geeignet und ausgebildet ist, zur Benutzung freigegeben zu werden, wenn das Haushaltgerät (102) das mobile Gerät (200) mittels des Identitätssignals erkennt.

7. Haushaltvorrichtung (100) gemäß einem der vorangegangenen Ansprüche, wobei das Haushaltgerät (102) ausgebildet ist, um eine Ladeenergie zum Laden des mobilen Geräts (200) an die Ladeschnittstelle (104) bereitzustellen, wenn das mobile Gerät (200) mit der Ladeeinrichtung (106) gekoppelt ist.

8. Haushaltvorrichtung (100) gemäß einem der vorangegangenen Ansprüche, wobei die Ladeeinrichtung (106) mittels eines Verbindungskabels (110) mit dem Haushaltgerät (102) elektrisch verbunden ist.

9. Haushaltvorrichtung (100) gemäß einem der vorangegangenen Ansprüche, wobei das Haushaltgerät (102) als ein Einbaugerät ausgeführt ist.

10. Haushaltvorrichtung (100) gemäß einem der vorangegangenen Ansprüche, mit wenigstens einer Arbeitsplatte (108), wobei die Ladeeinrichtung (106) an der Arbeitsplatte (108) angeordnet ist, um das Laden des mobilen Geräts (200) zu ermöglichen, wenn das mobile Gerät (200) auf der Arbeitsplatte (108) abgelegt ist.

11. Haushaltvorrichtung (100) gemäß einem der vorangegangenen Ansprüche, mit einem Einbauelement (500), wobei die Ladeeinrichtung (106) in dem Einbauelement (500) modular angeordnet oder anordenbar ist.

12. Haushaltvorrichtung (100) gemäß dem vorangegangenen Anspruch, wobei das Einbauelement (500) verfahrbar ausgeführt ist.

13. Haushaltvorrichtung (100) gemäß einem der vorangegangenen Ansprüche, wobei das Haushaltgerät (102) als ein Kochfeld ausgeführt ist.

14. Verfahren zum Betreiben einer Haushaltvorrichtung (100) gemäß einem der vorangegangenen Ansprüche, wobei das Verfahren die folgenden Schritte umfasst:
- Einlesen wenigstens eines Statussignals der Ladeeinrichtung (106) und/oder des mobilen Geräts (200) über die Ladeschnittstelle (104); und
- Bereitstellen wenigstens einer Ladeenergie zum induktiven Laden des mobilen Geräts (200) an die Ladeschnittstelle (104), wenn das mobile Gerät (200) mit der Ladeeinrichtung (106) gekoppelt ist, wobei wenigsten eine den Status des mobilen Gerätes (200) repräsentierende Information mittels einer Ausgabeeinrichtung (302) des Haushaltgeräts (102) und/oder mittels einer separaten Einrichtung angezeigt wird.

## Claims

1. Domestic apparatus (100), comprising the following features:
a domestic appliance (102) having a charging interface (104); and
a charging device (106) for inductively charging a mobile device (200), wherein the charging device (106) is or can be electrically connected to the charging interface (104), wherein the domestic appliance (102) is designed to read in, via the charging interface (104) or a further interface (604) of the domestic appliance (102), at least one status signal which represents at least the status of the charging device (106) and/or the mobile device (200), wherein, using the status signal, the domestic appliance (102) is designed to provide to at least one output device (302) of the domestic appliance (102) an information signal representing the status at at least one interface.

2. Domestic apparatus (100) according to claim 1, wherein the mobile device (200) is provided by at least one mobile terminal (201), in particular a smartphone, tablet and/or laptop.

3. Domestic apparatus (100) according to claim 1, wherein the mobile device (200) is provided by at least one battery-powered domestic appliance (203).

4. Domestic apparatus (100) according to any of the preceding claims, wherein at least one control device (301) is provided which stores and/or evaluates at least one status of the charging device (106) and/or the mobile device (200).

5. Domestic apparatus (100) according to any of the preceding claims, wherein the domestic appliance (102) is designed to read in via the charging interface (104) or a further interface (604) of the domestic appliance (102) at least one identity signal which represents at least one identity of the mobile device (200).

6. Domestic apparatus (100) according to the preceding claim 5, wherein the domestic appliance (102) is suitable and designed for being enabled for use when the domestic appliance (102) recognises the mobile device (200) by means of the identity signal.

7. Domestic apparatus (100) according to any of the preceding claims, wherein the domestic appliance (102) is designed to provide charging energy for charging the mobile device (200) to the charging interface (104) when the mobile device (200) is coupled to the charging device (106).

8. Domestic apparatus (100) according to any of the preceding claims, wherein the charging device (106) is electrically connected to the domestic appliance (102) by means of a connecting cable (110).

9. Domestic apparatus (100) according to any of the preceding claims, wherein the domestic appliance (102) is designed as a built-in appliance.

10. Domestic apparatus (100) according to any of the preceding claims, comprising at least one worktop (108), wherein the charging device (106) is arranged on the worktop (108) to allow the mobile device (200) to be charged when the mobile device (200) is placed on the worktop (108).

11. Domestic apparatus (100) according to any of the preceding claims, comprising a built-in element (500), wherein the charging device (106) is or can be modularly arranged in the built-in element (500).

12. Domestic apparatus (100) according to the preceding claim, wherein the built-in element (500) is designed to be movable.

13. Domestic apparatus (100) according to any of the preceding claims, wherein the domestic appliance (102) is designed as a cooking hob.

14. Method for operating a domestic apparatus (100) according to any of the preceding claims, wherein the method comprises the following steps:
- reading in at least one status signal from the charging device (106) and/or the mobile device (200) via the charging interface (104); and
- providing at least one charging energy for inductively charging the mobile device (200) to the charging interface (104) when the mobile device (200) is coupled to the charging device (106), wherein at least one piece of information representing the status of the mobile device (200) is displayed by means of an output device (302) of the domestic appliance (102) and/or by means of a separate device.

## Revendications

1. Dispositif électroménager (100) comportant les caractéristiques suivantes :
un appareil électroménager (102) comportant une interface de charge (104) ; et
un moyen de charge (106) destiné à charger de manière inductive un appareil mobile (200), dans lequel le moyen de charge (106) est raccordé ou peut être raccordé électriquement à l'interface de charge (104), dans lequel l'appareil électroménager (102) est configuré pour lire au moins un signal d'état, qui représente au moins l'état du moyen de charge (106) et/ou de l'appareil mobile (200), par l'intermédiaire de l'interface de charge (104) ou d'une autre interface (604) de l'appareil électroménager (102), dans lequel l'appareil électroménager (102) est configuré pour fournir, à l'aide du signal d'état, un signal d'information représentant l'état à au moins une interface vers au moins un moyen de sortie (302) de l'appareil électroménager (102).

2. Dispositif électroménager (100) selon la revendication 1, dans lequel l'appareil mobile (200) est fourni par au moins un terminal mobile (201), en particulier un téléphone intelligent, une tablette et/ou un ordinateur portable.

3. Dispositif électroménager (100) selon la revendication 1, dans lequel l'appareil mobile (200) est fourni par au moins un appareil électroménager à batterie (203).

4. Dispositif électroménager (100) selon l'une des revendications précédentes, dans lequel il est prévu au moins un moyen de commande (301) qui mémorise et/ou évalue au moins un état du moyen de charge (106) et/ou de l'appareil mobile (200).

5. Dispositif électroménager (100) selon l'une des revendications précédentes, dans lequel l'appareil électroménager (102) est configuré pour lire, par l'intermédiaire de l'interface de charge (104) ou d'une autre interface (604) de l'appareil électroménager (102), au moins un signal d'identité qui représente au moins une identité de l'appareil mobile (200).

6. Dispositif électroménager (100) selon la revendication 5 précédente, dans lequel l'appareil électroménager (102) est adapté et configuré pour être autorisé à être utilisé lorsque l'appareil électroménager (102) reconnaît l'appareil mobile (200) à l'aide du signal d'identité.

7. Dispositif électroménager (100) selon l'une des revendications précédentes, dans lequel l'appareil électroménager (102) est configuré pour fournir une énergie de charge, permettant de charger l'appareil mobile (200), à l'interface de charge (104) lorsque l'appareil mobile (200) est couplé au moyen de charge (106).

8. Dispositif électroménager (100) selon l'une des revendications précédentes, dans lequel le moyen de charge (106) est raccordé électriquement à l'appareil électroménager (102) à l'aide d'un câble de raccordement (110).

9. Dispositif électroménager (100) selon l'une des revendications précédentes, dans lequel l'appareil électroménager (102) est réalisé sous la forme d'un appareil encastré.

10. Dispositif électroménager (100) selon l'une des revendications précédentes, comportant au moins un plan de travail (108), dans lequel le moyen de charge (106) est disposé sur le plan de travail (108) pour permettre la charge de l'appareil mobile (200) lorsque l'appareil mobile (200) est placé sur le plan de travail (108).

11. Dispositif électroménager (100) selon l'une des revendications précédentes, comportant un élément encastré (500), dans lequel le moyen de charge (106) est disposé ou peut être disposé de manière modulaire dans l'élément encastré (500).

12. Dispositif électroménager (100) selon la revendication précédente, dans lequel l'élément encastré (500) est réalisé de manière à pouvoir être déplacé.

13. Dispositif électroménager (100) selon l'une des revendications précédentes, dans lequel l'élément électroménager (102) est réalisé sous la forme d'une plaque de cuisson.

14. Procédé permettant de faire fonctionner un dispositif électroménager (100) selon l'une des revendications précédentes, dans lequel le procédé comprend les étapes suivantes :
- lecture d'au moins un signal d'état du moyen de charge (106) et/ou de l'appareil mobile (200) par l'intermédiaire de l'interface de charge (104) ; et
- fourniture d'au moins une énergie de charge, permettant de charger de manière inductive l'appareil mobile (200), à l'interface de charge (104) lorsque l'appareil mobile (200) est couplé au moyen de charge (106), dans lequel au moins une information représentant l'état de l'appareil mobile (200) est affichée à l'aide d'un moyen de sortie (302) de l'appareil électroménager (102) et/ou à l'aide d'un moyen distinct.
